# EUROPEAN PATENT SPECIFICATION

(11) **EP 2 490 316 B1**
(45) Date of publication and mention of the grant of the patent: **30.10.2013**
(21) Application number: 11154946.5
(22) Date of filing: 18.02.2011
(51) Int. Cl.: H02J 7/00, H02H 11/00

(54) **A method and circuit for controlling a gate-source voltage of a reverse polarity protection MOSFET**
Verfahren und Schaltung zur Steuerung einer Gate-Source-Spannung eines Schutz-MOSFET mit Polaritätsumkehr
Procédé et circuit pour le contrôle d'une tension de source de grille d'un MOSFET de protection contre la polarité inverse

(43) Date of publication of application: 22.08.2012
(73) Proprietor: Rohm Co., Ltd., Kyoto-shi, Kyoto 615-8585 (JP)
(72) Inventor: Fronen, Rob, 5391AL Nuland (NL); Harada, Shoichi, 40547 Düsseldorf (DE)
(74) Representative: Isarpatent

(56) References cited:
- EP-A1- 1 978 617
- EP-A2- 0 626 745

## Description

The invention relates to a method and circuit for controlling a gate-source voltage of a reverse polarity protection MOSFET and in particular controlling a gate-source voltage of a reverse polarity protection MOSFET provided for a car battery.

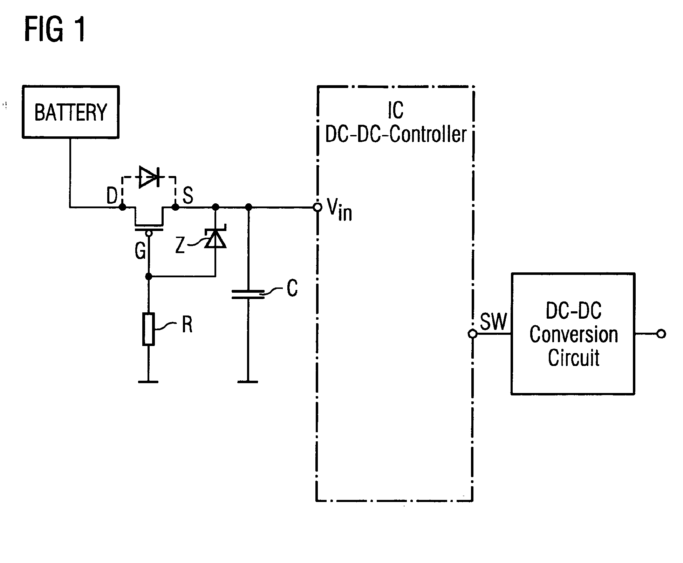

Figure 1 shows a block diagram of a conventional voltage control circuit being provided for controlling a gate-source voltage of a reverse polarity protection MOSFET provided for a battery such as a car battery. As can be seen in Figure 1 the battery is connected to a drain D of the reverse polarity protection MOSFET wherein the MOSFET comprises a source terminal S connected in the shown exemplary arrangement to a DC/DC controller which can be provided for a DC/DC conversion circuit. The source terminal S of the reverse polarity protection MOSFET is connected to a supply voltage input terminal Vᵢₙ of the DC/DC controller as can be seen in Figure 1. The reverse polarity protection MOSFET is provided for protecting the integrated circuit IC against reverse polarity, for example, if the connections to the car battery are interchanged by the car operator or car maintenance technician. Accordingly, a clamp circuit is provided for the gate terminal G of the reverse polarity protection MOSFET to maintain a gate-source voltage for correct polarity and making gate source voltage of the reverse polarity protection MOSFET equal to zero in case of wrong polarity. The clamp circuit of the gate terminal of the reverse polarity protection MOSFET is formed by a Zener diode Z and a resistor R. Accordingly, in a conventional reverse polarity protection circuit the integrated clamp circuit is required to provide the capability of the reverse polarity protection MOSFET to withstand high gate-source voltages. The capacitor C is provided for storing energy and for smoothing any potential changes at the supply voltage input terminal Vᵢₙ of the integrated DC/DC controller. As is shown in Fig. 1 the reverse polarity protection MOSFET is for example a depletion type p-channel MOSFET having a parasitic diode as illustrated between the drain terminal D and the source terminal S of this MOSFET. In case that the potential at the gate terminal G is the same as the potential at the source terminal S the conductive channel of the MOSFET is closed and no electric current is flowing.

The conventional arrangement as shown in Figure 1 has several drawbacks. The external clamp circuit comprising the resistor R and the Zener diode Z is not integrated in the integrated circuit IC but is formed by external components making this solution error prone in assembly. A false connection of components can lead to a misfunction of the protection circuit and to damages of the integrated DC/DC controller.

The conventional arrangement as shown in Figure 1 of the DC/DC controller comprises an integrated output MOSFET connected to the switching output SW which in turn is connected to the DC/DC conversion circuit. Accordingly, this conventional arrangement has the further drawback that a gate-source voltage of the output power MOSFET can not be sustained during a voltage drop due to a cold cranking operation, i.e. starting a car in winter time, wherein the car battery is connected via the reverse polarity protection MOSFET to the DC/DC controller as shown in Figure 1. In a conventional circuit such as shown in Fig 1. the gate source voltage of the reverse polarity protection diode cannot become negative during cold cranking with low battery voltage. This in effect reduces the gate source voltage to a value equal to the battery voltage during cold cranking and hence increases the On resistance of the reverse polarity protection MOSFET. Such a conventional circuit arrangement has therefore the additional drawback that its performance during cold cranking is low.

EP 0 626 745 A2 discloses a battery protection circuit for protecting a load from a reverse voltage. For this purpose, a MOSFET is used. If the battery is connected in reverse, a gate driver turns to MOSFET off and the intrinsic body-drain diode of the MOSFET prevents a reverse current flow through the load.

Accordingly, it is an object of the present invention to provide a method and a circuit for controlling a gate-source voltage of a reverse polarity protection MOSFET to overcome the above-mentioned disadvantages and to provide a reliable reverse polarity protection of an integrated circuit with a high performance.

This object is achieved by a voltage control circuit comprising the features of claim 1 and a method for controlling a gate-source voltage according to claim 15.

In a possible embodiment of the voltage control circuit according to the present invention the integrated circuit connected to the reverse polarity protection MOSFET is a DC/DC controller comprising an electronic power device connected to the supply voltage terminal of the integrated circuit.

In a possible embodiment this electronic power device comprises a power MOSFET, a LIGBT or a bipolar transistor.

In a possible embodiment the electronic power device is also integrated in the integrated circuit IC.

In an alternative embodiment the electronic power device can be formed by an external discrete electronic power device connected to the integrated circuit IC.

In a further embodiment of the voltage control circuit according to the present invention the integrated power device being integrated in the integrated circuit is driven by a driving circuit having as a first supply voltage a voltage applied to the supply voltage terminal Vᵢₙ and as a second supply voltage a clamp voltage V_{clamp} provided by an integrated clamp voltage control transistor of the integrated circuit, wherein said transistor is controlled by the integrated clamp circuit of the integrated circuit IC.

In a possible embodiment of the voltage control circuit according to the present invention the voltage control transistor is formed by a MOSFET.

In a further possible alternative embodiment of the voltage control circuit according to the present invention the voltage control transistor is formed by a bipolar transistor.

In a possible embodiment of the voltage control circuit according to the present invention integrated clamp circuit of the integrated circuit IC comprises an integrated current source and a Zener diode connected to the supply voltage input terminal Vᵢₙ of the integrated circuit IC.

In a possible embodiment the Zener diode can be substituted by other electronic means to keep a constant voltage difference in relation to the supply voltage input terminal Vᵢₙ of said integrated circuit.

The integrated clamp voltage control transistor can be formed by a MOSFET or by a bipolar transistor. In a possible embodiment the gate of an integrated clamp voltage control MOSFET or a base of the integrated clamp voltage control bipolar transistor are connected via a Zener diode or other means to the supply voltage input terminal Vᵢₙ of the integrated circuit.

In a possible embodiment of the voltage control circuit according to the present invention the integrated circuit comprises a clamp voltage output terminal Vₒᵤₜ to which the generated clamp voltage V_{clamp} is applied.

In a further possible embodiment of the voltage control circuit according to the present invention the clamp voltage output terminal Vₒᵤₜ of the integrated circuit IC is connected to a gate G of the reverse polarity protection MOSFET.

In a further possible embodiment of the voltage control circuit according to the present invention a drain D of the reverse polarity protection MOSFET is connected to the DC voltage source wherein the source S of the reverse polarity protection MOSFET is connected to the supply voltage input terminal Vᵢₙ of the integrated circuit IC. The DC voltage source can be formed by a car battery or vehicle battery.

In a possible embodiment of the voltage control circuit according to the present invention an integrated power device of the integrated circuit IC is connected via a switching output terminal SW to a DC/DC conversion circuit.

The DC/DC conversion circuit can comprise in a possible embodiment a Schottky diode, a coil and a capacitor.

The DC/DC conversion circuit can also comprise alternatively a DC/DC or LDO circuit.

In a possible embodiment of the voltage control circuit according to the present invention the DC/DC voltage source is a car battery providing a predetermined cold cranking supply voltage supply curve.

In a further embodiment of the voltage control circuit according to the present invention a capacitor is provided between the supply voltage input terminal Vᵢₙ and the clamp voltage output terminal Vₒᵤₜ of the integrated circuit IC.

In a possible embodiment of the voltage control circuit according to the present invention upon receiving a reduced supply voltage at the supply voltage input terminal Vᵢₙ of the integrated circuit IC during cold cranking of the vehicle the clamp voltage V_{clamp} provided by the integrated clamp voltage control transistor at the clamp voltage output terminal Vₒᵤₜ of the integrated circuit IC is reduced accordingly by the integrated clamp circuit to keep a constant gate-source voltage V_{GS} between the gate G of the reverse polarity protection MOSFET connected to the clamp voltage output terminal and the source S of the reverse polarity protection MOSFET connected to the clamp voltage input terminal Vᵢₙ of the integrated circuit IC, wherein an ON resistance of the reverse polarity protection MOSFET is minimized during the cold cranking of the vehicle.

In a still further possible embodiment of the voltage control circuit according to the present invention upon receiving a reduced supply voltage at the supply voltage input terminal Vᵢₙ of the integrated circuit IC during cold cranking of the vehicle the clamp voltage provided by the integrated clamp voltage control transistor at the clamp voltage output terminal Vout of the integrated circuit IC is reduced accordingly by the integrated clamp circuit to keep a constant gate-source voltage between the gate G of the integrated power device and the source S of the integrated power device connected to the supply voltage input terminal Vᵢₙ of the integrated circuit IC, wherein an ON resistance of the reverse polarity protection MOSFET is minimized during the cold cranking of the vehicle.

In a possible embodiment of the voltage control circuit according to the present invention upon receiving a reduced supply voltage at the supply voltage input terminal Vᵢₙ of the integrated circuit IC during cold cranking of the vehicle the clamp voltage buffered by the capacitor provided between the supply voltage terminal Vᵢₙ and the clamp voltage output terminal Vₒᵤₜ decreases the voltage at the clamp voltage output terminal Vₒᵤₜ to absolute negative values to keep a constant gate-source voltage V_{GS} between the gate G of the integrated power device and the source S of the integrated power device connected to said power supply input terminal Vᵢₙ of the integrated circuit, wherein an ON resistance of the integrated power device is minimized during the cold cranking of the vehicle.

In a further embodiment of the voltage control circuit according to the present invention the clamp voltage output terminal is not connected to any electrostatic discharge protection diode to avoid a prohibition of a reduction of the clamp voltage to negative voltages or values in response to a reduced supply voltage at the supply voltage input terminal Vᵢₙ during cold cranking of the vehicle.

In a possible embodiment of the voltage control circuit according to the present invention the integrated clamp voltage control device does not comprise parasitic diodes which prohibit a reduction of the clamp voltage to negative voltages in response to a reduced supply voltage at the supply voltage input terminal Vᵢₙ during cold cranking of the vehicle.

The invention further provides a method for controlling a gate-source voltage V_{GS} of a reverse polarity protection MOSFET which is provided between a DC voltage source of a vehicle and a supply voltage terminal Vᵢₙ of an integrated circuit IC,
wherein a voltage control circuit integrated in the integrated circuit IC controls the gate-source voltage V_{GS} of said reverse polarity protection MOSFET to be constant during cold cranking of the vehicle.

In the following possible embodiments of a voltage control circuit and a method for controlling a gate-source voltage of a reverse polarity protection MOSFET are described in more detail with reference to the enclosed figures.
Figure 1 shows a conventional circuit arrangement controlling a gate-source voltage of a reverse polarity protection MOSFET for illustrating underlying problems solved by the method and apparatus according to the present invention;
Figure 2 shows a circuit diagram for illustrating a possible implementation of the voltage control circuit according to the present invention;
Figure 3 shows a signal diagram for illustrating the functionality of a circuit and method for controlling a gate-source voltage of a reverse polarity protection MOSFET according to the present invention.

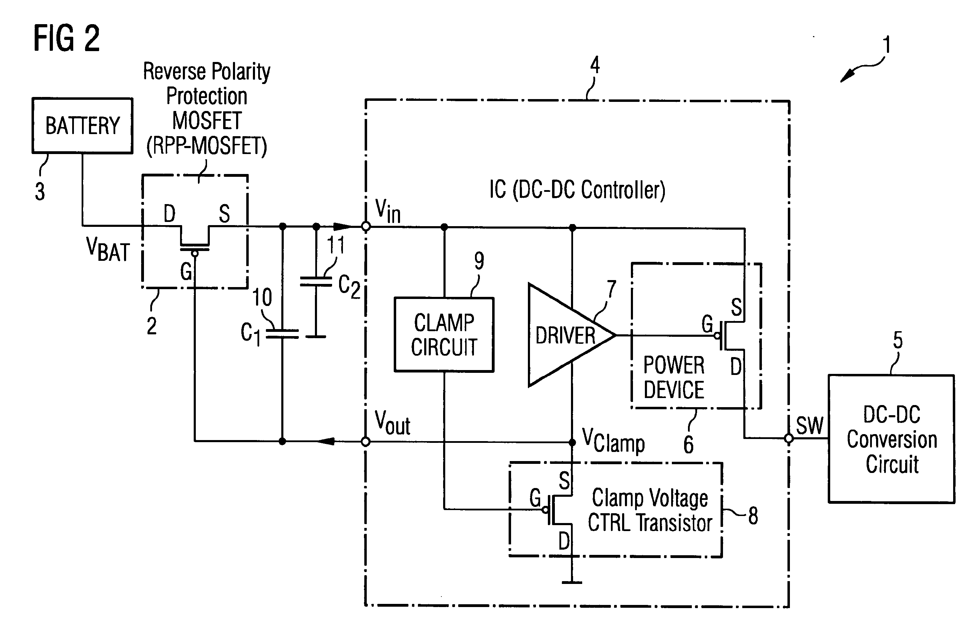

As can be seen in Figure 2 a voltage control circuit 1 according to the present invention is provided for controlling a gate-source voltage V_{GS} of a reverse polarity protection MOSFET 2 which is provided between a DC voltage source 3 and a supply voltage terminal Vᵢₙ of an integrated circuit 4. The DC voltage source 3 can be formed by a car battery of a vehicle. In the shown implementation the reverse polarity protection MOSFET 2 is formed by a depletion type p-channel MOSFET.

The integrated circuit 4 is formed in the shown embodiment of Figure 2 by a DC/DC controller controlling a DC/DC conversion circuit 5. The DC/DC conversion circuit 5 is connected to a switching terminal SW of the DC/DC controller chip 4. As can be seen in Figure 2 the drain terminal D of the reverse polarity protection MOSFET 2 is connected via a supply line to the battery 3 so that a battery voltage V_{bat} is applied to the drain terminal D of the reverse polarity protection MOSFET 2. The source terminal S of the reverse polarity protection MOSFET 2 is directly connected to an input terminal Vᵢₙ of the DC/DC controller 4. At the input terminal Vᵢₙ of the integrated circuit 4 a DC voltage can be applied which can range depending on the application and the used battery 3 from e.g. 3V to 42V. The gate terminal G of the reverse polarity protection MOSFET 2 is connected to an output terminal Vₒᵤₜ of the integrated circuit 4. A first capacitor 10 is provided between the source terminal S and the gate terminal G of the reverse polarity protection MOSFET. Further, a second capacitor C2 can be provided between the source terminal S and a reference potential such as ground. The capacitor C2 can be provided for storing energy and smoothing the supplied input voltage. The integrated circuit 4 which is formed in the shown exemplary implementation by a DC/DC controller which comprises a voltage control circuit being integrated in the integrated circuit 4 wherein the integrated voltage control circuit controls the gate-source voltage V_{gs} of the reverse polarity protection MOSFET 2 to be constant during a cold cranking of the vehicle or car. The integrated circuit 4 further comprises as shown in Figure 2 an electronic power device 6 to which the supply voltage terminal Vᵢₙ of the integrated circuit 4 is applied. The integrated power MOSFET 6 is in the shown embodiment of Figure 2 a p-channel power MOSFET having a source terminal S connected directly to the supply voltage input terminal Vᵢₙ of integrated circuit 4. The drain terminal D of the power device 6 is connected to a switching terminal SW of the integrated circuit 4. The gate G of the power device 6 is connected in the shown implementation to the output of a gate driving circuit 7. The integrated power device 6 is driven by the driving circuit 7 having as a first supply voltage a voltage applied to said supply voltage input terminal Vᵢₙ and as a second supply voltage a clamp voltage V_{clamp}. The clamp voltage V_{clamp} is provided by an integrated clamp voltage control transistor 8 of said integrated circuit 4. This integrated clamp voltage control transistor 8 is controlled by an integrated clamp circuit 9.

The clamp voltage control transistor 8 in the shown embodiment of Figure 2 is a MOSFET having a gate terminal G connected to the clamp circuit 9, a drain terminal D connected to a reference potential such as ground GND and a source terminal S connected to the output terminal Vₒᵤₜ of the integrated circuit 4. The voltage control transistor 8 can be formed in an alternative embodiment also by a bipolar transistor. Also the power device 6 can in an alternative embodiment be formed by a bipolar transistor. Further, it is possible that the power device 6 is formed by a LIGBT. As shown in the implementation of Figure 2 the power device 6 is formed as an integrated P-type MOSFET of the integrated circuit 4. In an alternative embodiment the power device 6 can also be formed by an external discrete electronic power device connected to an output terminal of the integrated circuit 4. Also the clamp voltage control transistor 8 can be formed by an external discrete element connected to the integrated circuit 4. In a possible embodiment the integrated clamp circuit 9 of the integrated circuit 4 can comprise an integrated current source and a Zener diode connected to the supply voltage input terminal Vᵢₙ of the integrated circuit 4. The gate G of the integrated clamp voltage control MOSFET 8 is connected in this way to the supply voltage input terminal Vᵢₙ via the Zener diode or other electronic means. If the clamp voltage control transistor 8 is formed by a bipolar transistor the integrated clamp circuit 9 is connected to a base terminal of said bipolar transistor. The generated clamp voltage V_{clamp} is applied to the clamp voltage output terminal Vₒᵤₜ as shown in Figure 2. The clamp voltage output terminal Vₒᵤₜ of integrated circuit 4 is connected to the gate G of the reverse polarity protection MOSFET 2. The first capacitor 10 is provided between the supply voltage input terminal Vᵢₙ and the clamp voltage output terminal Vₒᵤₜ of the integrated circuit 4. A further capacitor 11 is provided between the source terminal S of the reverse polarity protection MOSFET 2 which is connected to the input terminal Vᵢₙ of the integrated circuit 4 and a reference potential such as ground. Upon receiving a reduced supply voltage at the supply voltage input terminal Vᵢₙ the integrated circuit 4 during cold cranking of a vehicle the clamp voltage V_{clamp} provided by the integrated clamp voltage control transistor 8 at the clamp voltage output terminal Vₒᵤₜ of the integrated circuit 4 is reduced accordingly by the integrated clamp circuit 9 to keep a constant gate-source voltage between the gate G of the reverse polarity protection MOSFET 2 and the source S of the reverse polarity protection MOSFET 2. Accordingly, an ON resistance of the reverse polarity protection MOSFET 2 is minimized during the cold cranking of the vehicle. Upon receiving a reduced supply voltage at the supply voltage input terminal Vᵢₙ of the integrated circuit 4 during cold cranking of the vehicle the clamp voltage V_{clamp} provided by the integrated clamp voltage control transistor 8 at the clamp voltage output terminal Vₒᵤₜ of the integrated circuit 4 is reduced accordingly by the integrated clamp circuit 9 to keep a constant gate-source voltage V_{gs} between the gate G of the integrated power device 6 and the source S of the integrated power device 6 being connected to the supply voltage input terminal Vᵢₙ of the integrated circuit 4 as shown in Figure 2. Accordingly, an ON resistance of the integrated power device is also minimized during cold cranking of the vehicle. By minimizing the ON resistance the overall power performance of the voltage control circuit 1 according to the present invention is maintained during cold cranking.

Upon receiving a reduced supply voltage at the supply voltage input terminal Vᵢₙ of the integrated circuit 4 during cold cranking of the vehicle the clamp voltage V_{clamp} buffered by the capacitor 10 provided between the supply voltage terminal Vᵢₙ and the clamp voltage output terminal Vₒᵤₜ decreases the voltage at the clamp voltage output terminal Vₒᵤₜ to absolute negative values. This is done in order to keep a constant gate-source voltage V_{gs} between the gate G of the integrated power device 6 and the source S of the integrated power device 6. Thereby an ON resistance of the integrated power device 6 is also minimized during cold cranking of the vehicle. As can be seen in Figure 2 the clamp voltage output terminal Vₒᵤₜ is not connected to any electrostatic discharge protection diodes which would prohibit a reduction of the clamp voltage V_{clamp} to negative voltages in response to a reduced supply voltage at the supply voltage input terminal Vᵢₙ during cold cranking of the vehicle.

Moreover, the integrated clamp voltage control transistor 8 does not comprise parasitic diodes which would prohibit a reduction of the clamp voltage V_{clamp} to negative voltages in response to a reduced supply voltage at the supply voltage input terminal Vᵢₙ during cold cranking of the vehicle.

As can be seen in Figure 2 by using the clamp voltage V_{clamp} of the power device 6 as the driving voltage for the external reverse polarity protection MOSFET 2 an external clamp circuit is no longer necessary. The clamp voltage V_{clamp} drives the gate voltage of the external reverse polarity protection MOSFET 2 so that a constant gate-source voltage V_{gs} can be supplied even during voltage surges. Consequently, no external clamp circuit is necessary.

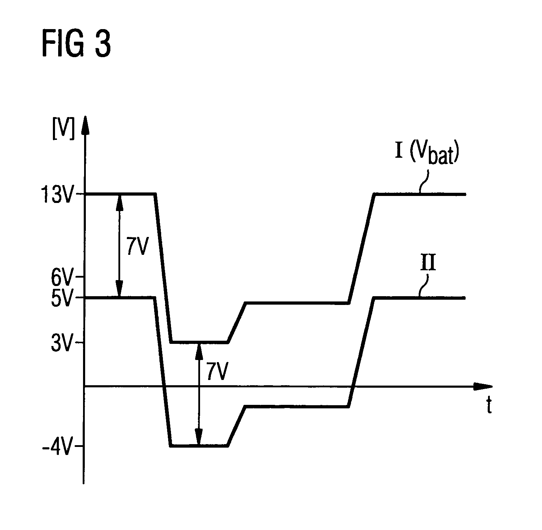

Figure 3 shows a signal diagram for illustrating a method for controlling a gate-source voltage V_{GS} of a reverse polarity protection MOSFET 2 according to the present invention. As can be seen in Figure 3 a predetermined cold cranking battery voltage curve is given by an ISO standard. The upper curve I of Figure 3 is the car battery voltage during cold cranking.

For example, during cold cranking the voltage of the battery 3 drops from an initial voltage of 13V to a low of 3V for a predetermined time before recovering to a plateau of 5V for a period of time and then returning to the initial potential. As can be seen in Figure 3 the clamp voltage V_{clamp} at the output terminal Vₒᵤₜ of the integrated circuit 4 follows the predetermined cold cranking voltage curve of the car battery 3 so that the difference between car battery voltage V_{bat} and the clamp voltage V_{clamp} is almost constant and comprises in the shown example 7V. Accordingly, the gate-source voltage V_{gs} between the source terminal S and the gate terminal G of the reverse polarity protection MOSFET 2 is kept constant during cold cranking of the vehicle. By not providing an electrostatic discharge protection diode at the output terminal Vₒᵤₜ of the integrated circuit 4 the clamp voltage V_{clamp} can swing to negative voltage values as shown in Figure 3 thereby securing a constant voltage between the gate and source terminal of the reverse polarity protection MOSFET 2. Upon receiving a reduced supply voltage at the supply voltage input terminal Vᵢₙ of the integrated circuit 4 during cold cranking the clamp voltage V_{clamp} provided by the integrated clamp voltage control transistor 8 at the clamp voltage output terminal Vₒᵤₜ is reduced accordingly by the integrated clamp circuit 9 to keep a constant gate-source voltage V_{GS} between the gate and the source of the reverse polarity protection MOSFET 2. The clamp voltage V_{clamp} buffered by the capacitor 10 decreases the voltage at the clamp voltage output terminal Vₒᵤₜ to absolute negative values to keep a constant gate-source voltage V_{gs} between the gate and the source of the integrated power device 6 so that an ON resistance of the integrated power device 6 is minimized during cold cranking of the vehicle. As can be seen in Figure 2 the voltage control arrangement 1 according to the present invention comprises a minimum number of external discrete components and increases the performance.

The invention further provides a method for controlling a gate-source voltage V_{gs} of a reverse polarity protection MOSFET 2 provided between a DC voltage source 3 of a vehicle and a supply voltage terminal of an integrated circuit 4. The integrated circuit 4 can be any kind of integrated circuit such as a DC/DC controller. According to the present invention a voltage control circuit integrated in the integrated circuit 4 controls the gate-source V_{gs} of the reverse polarity protection MOSFET 2 to be constant during cold cranking of the vehicle. The voltage control circuit performing the control of the gate-source voltage V_{gs} can be hardwired as shown in Figure 2. The method according to the present invention can comprise further implementations and embodiments. In order to reduce energy loss during normal operation and protect against reverse polarity, it can provide a controlled electrical current exclusively in a soft start time interval at a launch of the power supply. The method and apparatus according to the present invention can be used for any integrated circuit IC being connected via the reverse polarity protection MOSFET 2 to a DC voltage source or battery. The battery and integrated circuit can be located within any electronic device or a vehicle. The method and apparatus according to the present invention do not only increase the performance during cold cranking but also reduce the risk of false connections within devices following a maintenance of a vehicle, i.e. reverse battery connection. The invention further provides an integrated circuit 4 such as a DC/DC controller comprising a voltage control circuit with the features of claim 1. Furthermore, the invention provides in a possible embodiment a battery comprising an integrated DC/DC controller with a reverse polarity protection MOSFET 2. In this specific embodiment the integrated circuit 4 as well as the reverse polarity protection MOSFET 2 are part of a sophisticated battery 3. In a possible embodiment the reverse polarity protection MOSFET 2 as well as the capacitors 10, 11 form an independent component which can be connected between the integrated circuit 4 and the DC voltage source 3. In a further possible embodiment the battery 3 such as a car battery comprises as further integrated elements the reverse polarity protection MOSFET 2 as well as the two capacitors 10, 11. In this embodiment the battery 3 having integrated components can be directly connected to the input and output terminals Vᵢₙ, Vₒᵤₜ of the DC/DC controller 4 as shown in Figure 2.

## Claims

1. An integrated DC/DC control circuit (4) for controlling a gate-source voltage (Vgs) of a reverse polarity protection MOSFET (2) which is provided between a DC-voltage source (3) of a vehicle and a supply voltage terminal (Vin) of said integrated DC/DC control circuit (4),
wherein said integrated DC/DC control circuit (4) controls said gate-source voltage (Vgs) of said reverse polarity protection MOSFET (2) to be constant during cold cranking of said vehicle, wherein said integrated DC/DC control circuit (4) has an electronic power device (6) being connected to said supply voltage terminal (Vin) of said integrated DC/DC control circuit (4) and being driven by a driving circuit (7) of said integrated DC/DC control circuit (4), wherein said driving circuit (7) has as a first supply voltage a voltage applied to said supply voltage terminal (Vin) and as a second supply voltage a clamp voltage (Vclamp) provided by an integrated clamp voltage control transistor (8) of said integrated DC/DC control circuit (4) controlled by an integrated clamp circuit (9) of said DC/DC control circuit (4), wherein said integrated DC/DC control circuit (4) comprises a clamp voltage output terminal (Vout) to which said clamp voltage (Vclamp) is applied; wherein said clamp voltage output terminal (Vout) of said integrated DC/DC control circuit (4) is connected to a gate (G) of said reverse polarity protection MOSFET (2).

2. The integrated DC/DC control circuit according to claim 1,
wherein said electronic power device (6) comprises a power MOSFET, a LIGBT or a bipolar transistor being integrated in said integrated DC/DC control circuit (4) or being formed by an external discrete electronic power device connected to said integrated DC/DC control circuit (4).

3. The integrated DC/DC control circuit according to claim 1,
wherein said integrated DC/DC control circuit (4) is a LDO controller having said integrated power device (6) connected to said supply voltage terminal (Vin) of said integrated DC/DC control circuit (4).

4. The integrated DC/DC control circuit according to claim 1,2 or 3, wherein said voltage control transistor (8) is formed by MOSFET or a bipolar transistor.

5. The integrated DC/DC control circuit according to one of the preceeding claims 1 to 4, wherein said integrated clamp circuit (9) of said integrated DC/DC control circuit (4) comprises an integrated current source and a Zener diode connected to said supply voltage input terminal (Vin) of said integrated DC/DC control circuit (4) or other electronic means to keep connected to said supply voltage input terminal (Vin) and a gate of said integrated clamp voltage control MOSFET or alternatively a base of said clamp voltage control bipolar transistor.

6. The integrated DC/DC control circuit according to claim 1,
wherein a drain (D) of said reverse polarity protection MOSFET (2) is connected to the DC-voltage source and a source (S) of said reverse polarity protection MOSFET (2₎ is connected to the supply voltage input (Vin) of said integrated circuit (4).

7. The integrated DC/DC control circuit according to one of the preceding claims 1 - 6,
wherein said integrated power device (6)of said integrated DC/DC circuit (4) is connected via a switching output terminal (SW) to a DC/DC conversion circuit (5)comprising a Schottky diode, a coil and a capacitor or alternative a DC/DC or LDO circuit.

8. The integrated DC/DC control circuit according one of the preceding claims 1 - 7,
wherein said DC/DC voltage source (3) is a car battery providing a predetermined cold cranking supply voltage curve.

9. The integrated DC/DC control circuit according to one of the preceding claims 1 - 8,
wherein a capacitor (10) is provided between said supply voltage input terminal (Vin) and said clamp voltage output terminal (Vout) of said integrated DC/DC control circuit (4).

10. The integrated DC/DC control circuit according to one of the preceding claims 1 - 9,
wherein upon receiving a reduced supply voltage at the supply voltage input terminal (Vin) of said integrated DC/DC control circuit (4) during cold cranking of said vehicle the clamp voltage (Vclamp) provided by said integrated clamp voltage control transistor (8) at said clamp voltage output terminal (Vout) of said integrated DC/DC control circuit (4) is reduced accordingly by said integrated clamp circuit (9) to keep a constant gate-source voltage (Vgs) between the gate (G) of said reverse polarity protection MOSFET (2) connected to said clamp voltage output terminal (Vout) and the source (S) of said reverse polarity protection MOSFET (2) connected to said clamp voltage input terminal (Vin) of said integrated DC/DC control circuit (4),
wherein an ON resistance of said reverse polarity protection MOSFET (2) is minimized during the cold cranking of said vehicle.

11. The integrated DC/DC control circuit according to one of the preceding claims 1 - 10, wherein upon receiving a reduced supply voltage at the supply voltage input terminal (Vin) of said integrated DC/DC control circuit (4) during cold cranking of said vehicle the clamp voltage (Vclamp) provided by said integrated clamp voltage control transistor (8) at said clamp voltage output terminal (Vout) of said integrated DC/DC control circuit (4) is reduced accordingly by said integrated clamp circuit (9) to keep a constant gate-source voltage (Vgs) between the gate (G) of said integrated power MOSFET and the source of said integrated power device (6) connected to said supply voltage input terminal (Vin) of said integrated DC/DC control circuit (4),
wherein an ON resistance of said integrated power device (6) is minimized during the cold cranking of said vehicle.

12. The integrated DC/DC control circuit according to one of the preceding claims 9 - 11, wherein upon receiving a reduced supply voltage at the supply voltage input terminal (Vin) of said integrated DC/DC control circuit (4) during cold cranking of said vehicle the clamp voltage buffered by said capacitor provided between said supply voltage terminal (Vin) and said clamp voltage output terminal (Vout) decreases the voltage at said clamp voltage output terminal (Vout) to absolute negative values to keep a constant gate-source voltage (Vgs) between the gate (G) of said integrated power device (6) and the source (S) of said integrated power device (6) connected to said supply voltage input terminal (Vin) of said integrated DC/DC control circuit (4),
wherein an ON resistance of said integrated power device (6) is minimized during the cold cranking of said vehicle.

13. The integrated DC/DC control circuit according to one of the preceding claims 1 - 12, wherein said clamp voltage output terminal (Vout) is not connected to any electrostatic discharge protection diodes which prohibit a reduction of said clamp voltage (Vclamp) to negative voltages in response to a reduced supply voltage at said supply voltage input terminal (Vin) during cold cranking of said vehicle.

14. The integrated DC/DC control circuit according to one of the preceding claims 1 - 13, wherein said integrated clamp voltage control transistor (8) does not comprise parasitic diodes which prohibit a reduction of said clamp voltage (Vclamp) to negative voltages in response to a reduced supply voltage at said supply voltage input terminal (Vin) during cold cranking of said vehicle.

15. A method for controlling a gate-source voltage (Vgs) of a reverse polarity protection MOSFET (2) which is provided between a DC voltage source (3) of a vehicle and a supply voltage terminal (Vin) of an integrated DC/DC control circuit (4),
wherein an integrated DC/DC control circuit according to any of the preceding claim 1 to 14 controls said gate-source voltage (Vgs) of said reverse polarity protection MOSFET (2) to be constant during cold cranking of said vehicle.

## Patentansprüche

1. Integrierter Gleichstrom/Gleichstrom-Steuerschaltkreis (4) zum Steuern einer Gate-Source-Spannung (Vgs) eines Schutz-MOSFET mit Polaritätsumkehr (2), der zwischen einer Gleichspannungsquelle (3) eines Fahrzeugs und einem Versorgungsspannungs-Anschluss (Vin) des integrierten Gleichstrom/Gleichstrom-Steuerschaltkreises (4) angeordnet ist,
wobei der integrierte Gleichstrom/Gleichstrom-Steuerschaltkreis (4) die Gate-Source-Spannung (Vgs) des Schutz-MOSFET mit Polaritätsumkehr (2) so steuert, dass sie während des Durchdrehens des Fahrzeugmotors im kalten Zustand konstant ist, wobei der integrierte Gleichstrom/Gleichstrom-Steuerschaltkreis (4) ein elektronisches Leistungsbauelement (6) aufweist, das mit dem Versorgungsspannungs-Anschluss (Vin) des integrierten Gleichstrom/Gleichstrom-Steuerschaltkreises (4) verbunden ist und durch einen Treiberschaltkreis (7) des integrierten Gleichstrom/Gleichstrom-Steuerschaltkreises (4) angesteuert wird, wobei der Treiberschaltkreis (7) als eine erste Versorgungsspannung eine Spannung hat, die an den Versorgungsspannungs-Anschluss (Vin) angelegt wird, und als eine zweite Versorgungsspannung eine Klemmspannung (Vclamp) hat, die durch einen integrierten Klemmspannungssteuer-Transistor (8) des integrierten Gleichstrom/Gleichstrom-Steuerschaltkreises (4) bereitgestellt wird, der durch einen integrierten Klemmschaltkreis (g) des Gleichstrom/Gleichstrom-Steuerschaltkreises (4) gesteuert wird, wobei der integrierte Gleichstrom/Gleichstrom-Steuerschaltkreis (4) einen Klemmspannungsausgangs-Anschluss (Vout) umfasst, an den die Klemmspannung (Vclamp) angelegt wird; wobei der Klemmspannungsausgangs-Anschluss (Vout) des integrierten Gleichstrom/Gleichstrom-Steuerschaltkreises (4) mit einer Gate-Elektrode (G) des Schutz-MOSFET mit Polaritätsumkehr (2) verbunden ist.

2. Integrierter Gleichstrom/Gleichstrom-Steuerschaltkreis nach Anspruch 1, wobei das elektronische Leistungsbauelement (6) einen Leistungs-MOSFET, einen LIGBT oder einen Bipolartransistor umfasst, der in den integrierten Gleichstrom/Gleichstrom-Steuerschaltkreis (4) integriert ist oder durch ein externes diskretes elektronisches Leistungsbauelement gebildet wird, das mit dem integrierten Gleichstrom/Gleichstrom-Steuerschaltkreis (4) verbunden ist.

3. Integrierter Gleichstrom/Gleichstrom-Steuerschaltkreis nach Anspruch 1, wobei der integrierte Gleichstrom/Gleichstrom-Steuerschaltkreis (4) ein LDO-Controller ist, der das integrierte Leistungsbauelement (6) aufweist, das mit dem Versorgungsspannungs-Anschluss (Vin) des integrierten Gleichstrom/Gleichstrom-Steuerschaltkreises (4) verbunden ist.

4. Integrierter Gleichstrom/Gleichstrom-Steuerschaltkreis nach Anspruch 1, 2 oder 3, wobei der Spannungssteuertransistor (8) durch einen MOSFET oder einen Bipolartransistor gebildet wird.

5. Integrierter Gleichstrom/Gleichstrom-Steuerschaltkreis nach einem der vorangehenden Ansprüche 1 bis 4, wobei der integrierte Klemmschaltkreis (9) des integrierten Gleichstrom/Gleichstrom-Steuerschaltkreises (4) eine integrierte Stromquelle und eine Zenerdiode, die mit dem Versorgungsspannungseingangs-Anschluss (Vin) des integrierten Gleichstrom/Gleichstrom-Steuerschaltkreises (4) verbunden ist, oder ein anderes elektronisches Mittel, um mit dem Versorgungsspannungseingangs-Anschluss (Vin) und einer Gate-Elektrode des integrierten Klemmspannungssteuer-MOSFET oder alternativ einer Base-Elektrode des Klemmspannungssteuer-Bipolartransistors verbunden zu bleiben, umfasst.

6. Integrierter Gleichstrom/Gleichstrom-Steuerschaltkreis nach Anspruch 1, wobei eine Drain-Elektrode (D) des Schutz-MOSFET mit Polaritätsumkehr (2) mit der Gleichspannungsquelle verbunden ist und eine Source-Elektrode (S) des Schutz-MOSFET mit Polaritätsumkehr (2) mit dem Versorgungsspannungseingang (Vin) des integrierten Schaltkreises (4) verbunden ist.

7. Integrierter Gleichstrom/Gleichstrom-Steuerschaltkreis nach einem der vorangehenden Ansprüche 1 bis 6, wobei das integrierte Leistungsbauelement (6) des integrierten Gleichstrom/Gleichstrom-Schaltkreises (4) über einen Schaltausgangsanschluss (SW) mit einem Gleichstrom/Gleichstrom-Umwandlungsschaltkreis (5) verbunden ist, der eine Schottky-Diode, eine Spule und einen Kondensator oder alternativ einen Gleichstrom/Gleichstrom- oder LDO-Schaltkreis umfasst.

8. Integrierter Gleichstrom/Gleichstrom-Steuerschaltkreis nach einem der vorangehenden Ansprüche 1 bis 7, wobei die Gleichstrom/Gleichstrom-Spannungsquelle (3) eine Autobatterie ist, die eine vorgegebene Kaltdurchdreh-Versorgungsspannungskurve bereitstellt.

9. Integrierter Gleichstrom/Gleichstrom-Steuerschaltkreis nach einem der vorangehenden Ansprüche 1 bis 8, wobei ein Kondensator (10) zwischen dem Versorgungsspannungseingangs-Anschluss (Vin) und dem Klemmspannungsausgangs-Anschluss (Vout) des integrierten Gleichstrom/Gleichstrom-Steuerschaltkreises (4) angeordnet ist.

10. Integrierter Gleichstrom/Gleichstrom-Steuerschaltkreis nach einem der vorangehenden Ansprüche 1 bis 9, wobei nach dem Empfang einer reduzierten Versorgungsspannung an dem Versorgungsspannungseingangs-Anschluss (Vin) des integrierten Gleichstrom/Gleichstrom-Steuerschaltkreises (4) während des Durchdrehens des Fahrzeugmotors im kalten Zustand die Klemmspannung (Vclamp), die durch den integrierten Klemmspannungssteuertransistor (8) an dem Klemmspannungsausgangs-Anschluss (Vout) des integrierten Gleichstrom/Gleichstrom-Steuerschaltkreises (4) bereitgestellt wird, entsprechend durch den integrierten Klemmschaltkreis (9) reduziert wird, um eine konstante Gate-Source-Spannung (Vgs) zwischen der Gate-Elektrode (G) des Schutz-MOSFET mit Polaritätsumkehr (2), die mit dem Klemmspannungsausgangs-Anschluss (Vout) verbunden ist, und der Source-Elektrode (S) des Schutz-MOSFET mit Polaritätsumkehr (2), die mit dem Klemmspannungseingangs-Anschluss (Vin) des integrierten Gleichstrom/Gleichstrom-Steuerschaltkreises (4) verbunden ist, aufrecht zu erhalten, wobei ein EIN-Widerstand des Schutz-MOSFET mit Polaritätsumkehr (2) während des Durchdrehens des Fahrzeugmotors im kalten Zustand minimiert wird.

11. Integrierter Gleichstrom/Gleichstrom-Steuerschaltkreis nach einem der vorangehenden Ansprüche 1 bis 10, wobei, nachdem eine reduzierte Versorgungsspannung an dem Versorgungsspannungseingangs-Anschluss (Vin) des integrierten Gleichstrom/Gleichstrom-Steuerschaltkreises (4) während des Durchdrehens des Fahrzeugmotors im kalten Zustand empfangen wurde, die Klemmspannung (Vclamp), die durch den integrierten Klemmspannungssteuertransistor (8) an dem Klemmspannungsausgangs-Anschluss (Vout) des integrierten Gleichstrom/Gleichstrom-Steuerschaltkreises (4) bereitgestellt wird, entsprechend durch den integrierten Klemmschaltkreis (9) reduziert wird, um eine konstante Gate-Source-Spannung (Vgs) zwischen der Gate-Elektrode (G) des integrierten Leistungs-MOSFET und der Source-Elektrode des integrierten Leistungsbauelements (6), die mit dem Versorgungsspannungseingangs-Anschluss (Vin) des integrierten Gleichstrom/Gleichstrom-Steuerschaltkreises (4) verbunden ist, aufrecht zu erhalten, wobei ein EIN-Widerstand des integrierten Leistungsbauelements (6) während des Durchdrehens des Fahrzeugmotors im kalten Zustand minimiert wird.

12. Integrierter Gleichstrom/Gleichstrom-Steuerschaltkreis nach einem der vorangehenden Ansprüche 9 bis 11, wobei, nachdem eine reduzierte Versorgungsspannung an dem Versorgungsspannungseingangs-Anschluss (Vin) des integrierten Gleichstrom/Gleichstrom-Steuerschaltkreises (4) während des Durchdrehens des Fahrzeugmotors im kalten Zustand empfangen wurde, die Klemmspannung, die durch den Kondensator gepuffert wird, der zwischen dem Versorgungsspannungs-Anschluss (Vin) und dem Klemmspannungsausgangs-Anschluss (Vout) angeordnet ist, die Spannung an dem Klemmspannungsausgangs-Anschluss (Vout) auf absolute negative Werte reduziert, um eine konstante Gate-Source-Spannung (Vgs) zwischen der Gate-Elektrode (G) des integrierten Leistungsbauelements (6) und der Source-Elektrode (S) des integrierten Leistungsbauelements (6), die mit dem Versorgungsspannungseingangs-Anschluss (Vin) des integrierten Gleichstrom/Gleichstrom-Steuerschaltkreises (4) verbunden ist, aufrecht zu erhalten, wobei ein EIN-Widerstand des integrierten Leistungsbauelements (6) während des Durchdrehens des Fahrzeugmotors im kalten Zustand minimiert wird.

13. Integrierter Gleichstrom/Gleichstrom-Steuerschaltkreis nach einem der vorangehenden Ansprüche 1 bis 12, wobei der Klemmspannungsausgangs-Anschluss (Vout) mit keinerlei Dioden zum Schutz vor elektrostatischer Entladung verbunden ist, die eine Reduzierung der Klemmspannung (Vclamp) auf negative Spannungen in Reaktion auf eine reduzierte Versorgungsspannung an dem Versorgungsspannungseingangs-Anschluss (Vin) während des Durchdrehens des Fahrzeugmotors im kalten Zustand unterbinden.

14. Integrierter Gleichstrom/Gleichstrom-Steuerschaltkreis nach einem der vorangehenden Ansprüche 1 bis 13, wobei der integrierte Klemmspannungssteuertransistor (8) keine parasitischen Dioden umfasst, die eine Reduzierung der Klemmspannung (Vclamp) auf negative Spannungen in Reaktion auf eine reduzierte Versorgungsspannung an dem Versorgungsspannungseingangs-Anschluss (Vin) während des Durchdrehens des Fahrzeugmotors im kalten Zustand unterbinden.

15. Verfahren zum Steuern einer Gate-Source-Spannung (Vgs) eines Schutz-MOSFET mit Polaritätsumkehr (2), der zwischen einer Gleichspannungsquelle (3) eines Fahrzeugs und einem Versorgungsspannungs-Anschluss (Vin) eines integrierten Gleichstrom/Gleichstrom-Steuerschaltkreises (4) angeordnet ist, wobei ein integrierter Gleichstrom/Gleichstrom-Steuerschaltkreis nach einem der vorangehenden Ansprüche 1 bis 14 die Gate-Source-Spannung (Vgs) des Schutz-MOSFET mit Polaritätsumkehr (2) so steuert, dass sie während des Durchdrehens des Fahrzeugmotors im kalten Zustand konstant ist.

## Revendications

1. Circuit de commande cc/cc intégré (4) pour commander une tension grille-source (Vgs) d'un MOSFET de protection contre les inversions de polarité (2) qui est situé entre une source de tension continue (3) d'un véhicule et une borne de tension d'alimentation (Vin) dudit circuit de commande cc/cc intégré (4),
dans lequel ledit circuit de commande cc/cc intégré (4) commande ladite tension grille-source (Vgs) dudit MOSFET de protection contre les inversions de polarité (2) afin qu'elle soit constante pendant le démarrage à froid dudit véhicule, dans lequel ledit circuit de commande cc/cc intégré (4) possède un dispositif de puissance électronique (6) qui est relié à ladite borne de tension d'alimentation (Vin) dudit circuit de commande cc/cc intégré (4) et qui est attaqué par un circuit d'attaque (7) dudit circuit de commande cc/cc intégré (4), dans lequel ledit circuit d'attaque (7) a, en tant que première tension d'alimentation, une tension appliquée à ladite borne de tension d'alimentation (Vin) et, en tant que deuxième tension d'alimentation, une tension de blocage (Vclamp) fournie par un transistor de commande de tension de blocage intégré (8) dudit circuit de commande cc/cc intégré (4) commandé par un circuit de blocage intégré (9) dudit circuit de commande cc/cc (4), dans lequel ledit circuit de commande cc/cc intégré (4) comprend une borne de sortie de tension de blocage (Vout) à laquelle ladite tension de blocage (Vclamp) est appliquée, dans lequel ladite borne de sortie de tension de blocage (Vout) dudit circuit de commande cc/cc intégré (4) est reliée à une grille (G) dudit transistor MOSFET de protection contre les inversions de polarité (2).

2. Circuit de commande cc/cc intégré selon la revendication 1, dans lequel ledit dispositif de puissance électronique (6) comprend un MOSFET de puissance, un LIGBT ou un transistor bipolaire qui est intégré dans ledit circuit de commande cc/cc intégré (4), ou qui est formé par un dispositif de puissance électronique discret externe relié audit circuit de commande cc/cc intégré (4).

3. Circuit de commande cc/cc intégré selon la revendication 1, dans lequel ledit circuit de commande cc/cc intégré (4) est un contrôleur LDO ayant ledit dispositif de puissance intégré (6) relié à ladite borne de tension d'alimentation (Vin) dudit circuit de commande cc/cc intégré (4).

4. Circuit de commande cc/cc intégré selon la revendication 1,2 ou 3, dans lequel ledit transistor de commande de tension (8) est formé par un MOSFET ou un transistor bipolaire.

5. Circuit de commande cc/cc intégré selon l'une quelconque des revendications précédentes 1 à 4, dans lequel ledit circuit de blocage intégré (9) dudit circuit de commande cc/cc intégré (4) comprend une source de courant intégrée et une diode Zener reliée à ladite borne d'entrée de tension d'alimentation (Vin) dudit circuit de commande cc/cc intégré (4), ou d'autres moyens électroniques pour rester connecté à ladite borne d'entrée de tension d'alimentation (Vin) et à une grille dudit MOSFET de commande de tension de blocage intégré ou, en variante, à une base dudit transistor bipolaire de commande de tension.

6. Circuit de commande cc/cc intégré selon la revendication 1, dans lequel un drain (D) dudit MOSFET de protection contre les inversions de polarité (2) est relié à la source de tension continue et une source (S) dudit MOSFET de protection contre les inversions de polarité (2) est reliée à l'entrée de tension d'alimentation (Vin) dudit circuit intégré (4).

7. Circuit de commande cc/cc intégré selon l'une des revendications précédentes 1 à 6, dans lequel ledit dispositif de puissance intégré (6) dudit circuit cc/cc intégré (4) est relié par l'intermédiaire d'une borne de sortie de commutation (SW) à un circuit de conversion cc/cc (5) comprenant une diode Schottky, une bobine et un condensateur ou en variante un circuit cc/cc ou LDO.

8. Circuit de commande cc/cc intégré selon l'une des revendications précédentes 1 à 7, dans lequel ladite source de tension continue (3) est une batterie d'automobile présentant une courbe de tension d'alimentation de démarrage à froid prédéterminée.

9. Circuit de commande cc/cc intégré selon l'une des revendications précédentes 1 à 8, dans lequel un condensateur (10) est situé entre ladite borne d'entrée de tension d'alimentation (Vin) et ladite borne de sortie de tension de blocage (Vout) dudit circuit de commande cc/cc intégré (4).

10. Circuit de commande cc/cc intégré selon l'une des revendications précédentes 1 à 9, dans lequel, lors de la réception d'une tension d'alimentation réduite au niveau de la borne d'entrée de tension d'alimentation (Vin) dudit circuit de commande cc/cc intégré (4) pendant le démarrage à froid dudit véhicule, la tension de blocage (Vclamp) fournie par ledit transistor de commande de tension de blocage intégré (8) au niveau de ladite borne de sortie de tension de blocage (Vout) dudit circuit de commande cc/cc intégré (4) est réduite en conséquence par ledit circuit de blocage intégré (9) afin de maintenir une tension grille-source constante (Vgs) entre la grille (G) dudit MOSFET de protection contre les inversions de polarité (2) reliée à ladite borne de sortie de tension de blocage (Vout) et la source (S) dudit MOSFET de protection contre les inversions de polarité (2) reliée à ladite borne d'entrée de tension de blocage (Vin) dudit circuit de commande cc/cc intégré (4), dans lequel une résistance à l'état passant dudit MOSFET de protection contre les inversions de polarité (2) est minimisée pendant le démarrage à froid du dit véhicule.

11. Circuit de commande cc/cc intégré selon l'une des revendications précédentes 1 à 10, dans lequel, lors de la réception d'une tension d'alimentation réduite au niveau de la borne d'entrée de tension d'alimentation (Vin) dudit circuit de commande cc/cc intégré (4) pendant le démarrage à froid dudit véhicule, la tension de blocage (Vclamp) fournie par ledit transistor de commande de tension de blocage intégré (8) au niveau de ladite borne de sortie de tension de blocage (Vout) dudit circuit de commande cc/cc intégré (4) est réduite en conséquence par ledit circuit de blocage intégré (9) afin de maintenir une tension grille-source constante (Vgs) entre la grille (G) dudit MOSFET de puissance intégré et la source dudit dispositif de puissance intégré (6) reliée à ladite borne d'entrée de tension d'alimentation (Vin) dudit circuit de commande cc/cc intégré (4), dans lequel une résistance à l'état passant dudit dispositif de puissance intégré (6) est minimisée pendant le démarrage à froid dudit véhicule.

12. Circuit de commande cc/cc intégré selon l'une des revendications précédentes 9 à 11, dans lequel, lors de la réception d'une tension d'alimentation réduite au niveau de la borne d'entrée de tension d'alimentation (Vin) dudit circuit de commande cc/cc intégré (4) pendant le démarrage à froid dudit véhicule, la tension de blocage tamponnée par ledit condensateur situé entre ladite borne de tension d'alimentation (Vin) et ladite borne de sortie de tension de blocage (Vout) diminue la tension au niveau de ladite borne de sortie de tension de blocage (Vout) à des valeurs négatives absolues afin de maintenir une tension grille-source constante (Vgs) entre la grille (G) dudit dispositif de puissance intégré (6) et la source (S) dudit dispositif de puissance intégré (6) reliée à ladite borne d'entrée de tension d'alimentation (Vin) dudit circuit de commande cc/cc intégré (4), dans lequel une résistance à l'état passant dudit dispositif de puissance intégré (6) est minimisée pendant le démarrage à froid du dit véhicule.

13. Circuit de commande cc/cc intégré selon l'une des revendications précédentes 1 à 12, dans lequel ladite borne de sortie de tension de blocage (Vout) n'est reliée aucune diode de protection contre les décharges électrostatiques qui empêche une réduction de ladite tension de blocage (Vclamp) à des tensions négatives en réponse à une tension d'alimentation réduite au niveau de ladite borne d'entrée de tension d'alimentation (Vin) pendant le démarrage à froid dudit véhicule.

14. Circuit de commande cc/cc intégré selon l'une des revendications précédentes 1 à 13, dans lequel ledit transistor de commande de tension de blocage intégré (8) ne comporte pas de diodes parasites qui empêchent une réduction de ladite tension de blocage (Vclamp) à des tensions négatives en réponse à une tension d'alimentation réduite au niveau de ladite borne d'entrée de tension d'alimentation (Vin) pendant le démarrage à froid dudit véhicule.

15. Procédé de commande d'une tension grille-source (Vgs) d'un MOSFET de protection contre les inversions de polarité (2) qui est situé entre une source de tension continue (3) d'un véhicule et une borne de tension d'alimentation (Vin) d'un circuit de commande cc/cc intégré (4), dans lequel un circuit de commande cc/cc intégré selon l'une quelconque des revendications précédentes 1 à 14 commande ladite tension grille-source (Vgs) dudit MOSFET de protection contre les inversions de polarité (2) afin qu'elle soit constante pendant le démarrage à froid dudit véhicule.
